# EUROPÄISCHE PATENTSCHRIFT

(11) **EP 2 649 408 B1**
(45) Veröffentlichungstag und Bekanntmachung des Hinweises auf die Patenterteilung: **09.09.2020**
(21) Anmeldenummer: 11793731.8
(22) Anmeldetag: 01.12.2011
(51) Int. Cl.: G01B 11/02

(54) **KAMERABASIERTES VERFAHREN ZUR ABSTANDSBESTIMMUNG BEI EINEM STEHENDEN FAHRZEUG, ENTSPRECHENDES COMPUTERPROGRAMM UND ENTSPRECHENDES PARKASSISTENZSYSTEM MIT KAMERA**
CAMERA-BASED METHOD FOR DISTANCE DETERMINATION IN A STATIONARY VEHICLE, CORRESPONDING COMPUTER PROGRAM AND CORRESPONDING PARKING ASSISTANCE SYSTEM WITH CAMERA
PROCÉDÉ BASÉ SUR UNE CAMÉRA SERVANT À DÉTERMINER DES DISTANCES DANS LE CAS D'UN VÉHICULE À L'ARRÊT, PROGRAMME D'ORDINATEUR CORRESPONDANT ET SYSTÈME D'ASSISTANCE AU STATIONNEMENT AVEC CAMÉRA CORRESPONDANT

(30) Priorität: 08.12.2010 DE 102010062589
(43) Veröffentlichungstag der Anmeldung: 16.10.2013
(73) Patentinhaber: Robert Bosch GmbH, 70442 Stuttgart (DE)
(72) Erfinder: HEGER, Thomas, 71229 Leonberg (DE); HELMLE, Michael, 73732 Esslingen (DE)
(86) Internationale Anmeldenummer: PCT/EP2011/071545
(87) Internationale Veröffentlichungsnummer: WO 2012/076400

(56) Entgegenhaltungen:
- EP-A1- 2 105 702
- DE-A1-102005 036 782
- US-A1- 2008 111 985

## Beschreibung

### Stand der Technik

Die Erfindung betrifft Verfahren zur Abstandsbestimmung, wie sie beispielsweise bei Parkassistenten oder anderen Subsystemen eines Fahrerassistenzsystems zum Einsatz kommen.

Fahrerassistenzsysteme umfassen Zusatzeinrichtungen in Fahrzeugen zur Unterstützung des Fahrers in bestimmten Fahrsituationen. Hierzu umfasst ein Fahrerassistenzsystem häufig Subsysteme wie etwa ABS (Antiblockiersystem) oder ESP (elektronisches Stabilitätsprogramm), aber auch beispielsweise einen Abstandsregeltempomaten ("Active Cruise Control", ACC) oder einen Ein- bzw. Ausparkassistenten. Insbesondere bei den letztgenannten Subsystemen ist eine Abstandsbestimmung zu Objekten in einer Fahrzeugumgebung erforderlich, etwa um den Fahrer vor Hindernissen zu warnen oder um bei einer aktiven Längs- und/oder Querführung die Trajektorie entsprechend anzupassen.

Eine auf einer Ultraschallsensorik basierende Abstandsbestimmung im fahrenden oder auch stehenden Fahrzeug ist bekannt. Eine Abstandsbestimmung kann aber auch basierend auf einer Bildsensorik erfolgen. Neben der Verwendung einer Stereokamera, oder einer Mehrzahl von beabstandet am Fahrzeug angebrachten Kameras, kann ein Abstand auch basierend auf einer Folge von Aufnahmen einer Monokamera bestimmt werden. Hierbei wird eine von der Kamera aufgenommene Bildfolge auf das Vorhandensein eines "Optical Flows" (OFL) bei einem Objekt analysiert, wie er sich bspw. aus einer Annäherung an das Objekt im Blickfeld der Kamera ergibt. Aus dem OFL, d.h. einer Veränderung der scheinbaren Größe des Objekts, kann auf einen Abstand geschlossen werden. Derartige Verfahren setzen eine Bewegung des Fahrzeugs entweder relativ zum Boden (der Fahrbahn) und/oder gegenüber dem Objekt voraus.

Es ist wünschenswert, eine kamerabasierte Abstandsbestimmung auch bei einem stehenden (bspw. geparkten) Fahrzeug gegenüber einem ruhenden Objekt durchführen zu können, bspw. damit ein Parkassistent beim noch stehenden Fahrzeug vor einem zu geringen Abstand zu einem parkraumbegrenzenden Objekt warnen oder eine Ausparktrajektorie berechnen kann. Kamerabasierte Verfahren benötigen hierzu eine Mehrzahl an Kameras oder eine Stereokamera. Aus der DE 10 2005 036 782 A1 ist ein weiteres Verfahren beschrieben, welches mit einer Monokamera auskommt. Hierbei werden zwei Aufnahmen einer Fahrzeugumgebung angefertigt. Zwischen diesen Aufnahmen muss eine Relativbewegung zwischen Kamera und Fahrzeugumgebung stattgefunden haben. Im Falle eines stehenden Fahrzeugs wird ein System vorgeschlagen, bei dem die Kamera nicht fest am Fahrzeug befestigt ist, sondern mittels eines Schienensystems relativ zum Fahrzeug und damit relativ zur Fahrzeugumgebung bewegt werden kann. Eine Messsensorik erfasst eine Relativbewegung zwischen Kamera und Fahrzeug, und damit zur Umgebung. Auf diese Weise wird bei stehendem Fahrzeug eine Abstandsmessung möglich.

Die vorstehend genannten kamerabasierten Verfahren bzw. Systeme sind vergleichsweise komplex, weil sie entweder eine Mehrzahl an Kameras, zumindest eine Stereokamera, oder eine komplizierte mechanische, fehleranfällige Installation einer Kamera auf einem Schienensystem erfordern.

### Offenbarung der Erfindung

*Es besteht ein Bedarf an einem kamerabasierten Verfahren zur Abstandsbestimmung zu einem Objekt in einer Fahrzeugumgebung bei einem stehenden Fahrzeug, welches weniger kompliziert und fehleranfällig, und damit kostengünstiger ist als die vorstehend geschilderten, bekannten Verfahren.*

Erfindungsgemäß wird ein kamerabasiertes Verfahren zur Abstandsbestimmung zu einem Objekt in einer Fahrzeugumgebung bei einem stehenden Fahrzeug vorgeschlagen, welches die folgenden Schritte aufweist: Detektieren eines ersten vordefinierten Ereignisses, welches in Zusammenhang mit einer Nickbewegung des Fahrzeugs steht; basierend auf der Detektion des ersten Ereignisses, Aktivieren der Kamera, um mit zeitlichem Bezug zur Nickbewegung ein erstes und ein zweites Bild der Fahrzeugumgebung aufzunehmen; und Verarbeiten des ersten und des zweiten Bildes, um aus einer zwischen den Aufnahmezeitpunkten des ersten und des zweiten Bildes aufgrund der Nickbewegung erfolgten Verschiebung des Objekts im Blickfeld der Kamera einen Abstand zum Objekt zu bestimmen.

Bei bestimmten Ausführungsformen der Erfindung wird das erste Bild vor oder während der Nickbewegung und das zweite Bild zeitlich darauffolgend während oder nach der Nickbewegung aufgenommen.

Das erste Ereignis kann eines oder mehrere der folgenden Ereignisse umfassen: Entriegelung einer Fahrzeugtür, bei der es sich beispielsweise um eine Fahrertür, Beifahrertür, Kofferraumtür oder auch eine Seitentür, etwa bei einem Bus, handeln kann, wobei die Entriegelung bspw. entweder eine mechanische Entriegelung oder eine elektronische bzw. ferngesteuerte Entriegelung der Fahrzeugtür sein kann; Öffnung einer Fahrzeugtür; Veränderung einer Gewichtsbelastung eines Fahrzeugsitzes, die beispielsweise durch entsprechende Sensorik am Fahrersitz, Beifahrersitz, etc. bestimmt werden kann; Absenkung des Fahrzeugs, weil eine Person einsteigt, eine Last eingeladen wird, etc., wobei die Absenkung etwa durch Sensorik an einer oder mehreren Radaufhängungen detektiert werden kann.

Damit festgestellt wird, dass das erste Ereignis aufgetreten ist, kann die Verwirklichung noch mindestens einer weiteren vordefinierten Voraussetzung erforderlich sein. Beispielsweise kann eine Detektion des ersten Ereignisses darauf basieren, dass das Fahrzeug steht bzw. geparkt ist. Dies kann wiederum etwa basierend darauf detektiert werden, dass der Motor ausgeschaltet ist und/oder eine Handbremse angezogen ist, etc. Mehrere der vorstehend genannten Bedingungen können zusammengefasst werden, wobei das erste Ereignis erst dann detektiert wird, wenn alle Bedingungen erfüllt sind.

Basierend auf der Detektion des ersten Ereignisses kann eine kontinuierliche Aktivierung der Kamera erfolgen. Zur Abstandsbestimmung muss ein Beginn der Nickbewegung nicht festgestellt werden, es genügt, dass als erstes Bild beispielsweise die erste Aufnahme verwendet wird, die von der aktivierten Kamera erzeugt wird. Zur Optimierung der Abstandsbestimmung wäre es vorteilhaft, wenn das zweite Bild dann aufgenommen wird, wenn die z.B. eine vertikale Verlagerung des Fahrzeugs maximal ist, d.h. während eines Tiefpunkts der Nickbewegung. Es ist aber ebenso denkbar, dass als zweites Bild eine Aufnahme verwendet wird, welches von der Kamera aufgenommen wird, wenn das Fahrzeug wieder in Ruhe ist, bspw. weil eine Person auf dem Fahrersitz Platz genommen hat.

Eine maximale Verlagerung des Fahrzeugs kann bei einer kontinuierlich aufgenommenen Bildfolge durch eine Bildverarbeitung bestimmt werden, bei der ein Vergleich der Position eines Objekts im Blickfeld der Kamera vorgenommen wird. Der Zeitpunkt der maximalen Verlagerung des Fahrzeugs infolge der Nickbewegung kann aber bspw. auch durch eine Sensorik an der Radaufhängung bestimmt werden und es kann ein zu diesem Zeitpunkt aus einer kontinuierlichen Bildfolge hervorgehendes oder zu diesem Zeitpunkt gezielt erzeugtes zweites Bild zur Abstandsbestimmung herangezogen werden.

Wird die Kamera basierend auf der Detektion des ersten Ereignisses nicht kontinuierlich aktiviert, kann bei bestimmten Ausführungsformen des erfindungsgemäßen Verfahrens das zweite Bild basierend auf einer Detektion eines zweiten Ereignisses aufgenommen werden, welches mit der Nickbewegung zumindest mittelbar in Zusammenhang steht. Hierbei kann das zweite Ereignis umfassen: Schließung einer Fahrzeugtür, bspw. einer Fahrertür oder einer vorher geöffneten Tür, die zur Detektion des ersten Ereignisses beigetragen hat; Detektion einer konstanten Gewichtsbelastung eines Fahrzeugsitzes (bspw. von einer Sensorik des Fahrersitzes), wie sie auftritt, wenn der Fahrer vollständig Platz genommen hat; und/oder Detektion einer Ruheposition oder einer Aufwärtsbewegung des Fahrzeugs, was anzeigt, dass die Nickbewegung beendet ist. Wie bereits oben angemerkt, muss das zweite Bild nicht zwingend bei maximaler (z.B. vertikaler) Auslenkung des Fahrzeugs aufgenommen werden, sondern kann unter der Annahme, dass etwa ein Fahrer eingestiegen ist und sich dadurch das Fahrzeug dauerhaft abgesenkt hat, auch nach dem Ende einer Nickbewegung erstellt werden. Unter dieser Annahme kann etwa das Anlassen des Motors und/oder Einlegen eines Ganges als auslösendes Ereignis zur Aufnahme des zweiten Bildes definiert werden.

Das erfindungsgemäße Verfahren umfasst den weiteren Schritt der Bestimmung einer absoluten Verlagerung der Kamera (in vertikaler Richtung und/oder durch Verschwenken einer Blickachse der Kamera, d.h. Änderung eines Winkels der Kamera etwa bezogen auf eine Horizontale) durch die Nickbewegung. Die bestimmte absolute Verlagerung geht dann in die Bestimmung des Abstandes zum Objekt ein. Die absolute Verlagerung kann bspw. aus einer Messung der Nickbewegung bzw. vertikalen Verlagerung des Fahrzeugs durch Sensorik an der Radaufhängung bestimmt werden.

Das erfindungsgemäße Verfahren kann etwa für die Anwendung im Rahmen eines Subsystems eines Fahrerassistenzsystems wie etwa eines Parkassistenzsystems zum Einsatz kommen. Entsprechend kann es sich bei der Kamera etwa um eine Rückfahrkamera eines Parkassistenzsystems des Fahrzeugs handeln. Mithilfe des erfindungsgemäßen Verfahrens kann bereits im Stillstand des Fahrzeugs, d.h. etwa vor dem Ausparken, ein Abstand zu einem im rückwärtigen Fahrzeugbereich befindlichen weiteren geparkten Fahrzeug oder einem sonstigen parkraumbegrenzenden Objekt bestimmt und der Fahrer vor diesem gewarnt werden. Alternativ oder zusätzlich kann das Fahrzeug eine Trajektorie basierend auf der Abstandsbestimmung berechnen, die für eine aktive bzw. mindestens teilautomatische Führung aus der Parklücke geeignet ist.

Das erfindungsgemäße Verfahren kann aber in entsprechender Weise auch mit einer nach vorn gerichteten einfachen Kamera implementiert werden und ermöglicht hier ebenfalls eine Abstandswarnung bzw. Trajektorienberechnung bereits beim stehenden Fahrzeug. Die Kamera kann sich aber auch etwa in einem Seitenspiegel des Fahrzeugs befinden. Hierbei wäre zweckmäßig, dass das auslösende Ereignis zur Aufnahme des ersten Bildes ein solches Ereignis ist, welches vor dem Öffnen der Fahrertür erfolgt; ein Beispiel hierfür wäre etwa ein elektronisches Entriegeln der Fahrzeugtür. Das auslösende Ereignis zur Aufnahme des zweiten Bildes könnte dann ein Ereignis sein wie etwa das Schließen der Fahrertür, oder ein weiteres, zeitlich üblicherweise nachfolgendes Ereignis sein wie das Anlassen des Motors etc.

Erfindungsgemäß wird weiterhin ein Computerprogramm vorgeschlagen, wobei das Computerprogramm zur Durchführung eines der hierin beschriebenen Verfahren vorgesehen ist, wenn das Computerprogramm auf einer programmierbaren Computereinrichtung ausgeführt wird. Bei der Computereinrichtung kann es sich beispielsweise um ein zentrales Verarbeitungsmodul ("Electronic Control Unit", ECU) eines Fahrerassistenzsystems, oder ein Modul zur Implementierung eines Subsystems eines Fahrerassistenzsystems, wie etwa eines Parkassistenzsystems, handeln. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm als eine Computereinrichtung zum Herunterladen bereitgestellt werden, z. B. über ein Datennetzwerk wie etwa das Internet, oder eine Kommunikationsverbindung, wie etwa eine Telefonleitung oder eine drahtlose Verbindung.

Erfindungsgemäß wird weiterhin ein Parkassistenzsystem mit einer Kamera vorgeschlagen, welche zur Abstandsbestimmung zu einem Objekt in einer Fahrzeugumgebung bei einem stehenden Fahrzeug ausgebildet ist. Das erfindungsgemäße Parkassistenzsystem, welches etwa ein Subsystem eines Fahrerassistenzsystems im Fahrzeug sein kann, weist die folgenden Komponenten auf: eine Komponente zum Detektieren eines ersten vordefinierten Ereignisses, welches in Zusammenhang mit einer Nickbewegung des Fahrzeugs erfolgt; eine Komponente zum Aktivieren, basierend auf der Detektion des ersten Ereignisses, der Kamera, um mit zeitlichem Bezug zur Nickbewegung ein erstes und ein zweites Bild der Fahrzeugumgebung aufzunehmen; und eine Komponente zum Verarbeiten des ersten und des zweiten Bildes, um aus einer zwischen den Aufnahmezeitpunkten des ersten und des zweiten Bildes aufgrund der Nickbewegung erfolgten Verschiebung des Objekts im Blickfeld der Kamera einen Abstand zum Objekt zu bestimmen.

Bei einer Ausführungsform eines erfindungsgemäßen Parkassistenzsystems ist die Kamera am Fahrzeug derart beweglich befestigt, dass eine Dreh- oder Schwenkbewegung der Kamera gegenüber dem Fahrzeug zur Unterstützung der Abstandsbestimmung ermöglicht wird.

### Vorteile der Erfindung

Die Erfindung ermöglicht eine Abstandsbestimmung zu einem Objekt in einer Fahrzeugumgebung bei einem stehenden Fahrzeug mittels einer einfachen Monokamera, die fest am Fahrzeug angebracht sein kann. Die Erfindung basiert u.a. auf der Idee, dass auch bei einem stehenden Fahrzeug eine Nickbewegung desselben einen Optical Flow (bzw. "Motion Flow") für eine feste Kamera erzeugt, der für eine Abstandbestimmung herangezogen werden kann. Die Nickbewegung kann durch das Einsteigen des Fahrers oder einen Beladevorgang entstehen. Die Nickbewegung ermöglicht also die Verwirklichung einer Quasi-Stereo-Bildgebung mit einer Monokamera, obwohl das Fahrzeug steht. Ein Schienensystem oder eine sonstige mechanisch bewegliche Befestigung ist nicht erforderlich, so dass das erfindungsgemäße Verfahren einfach, wartungsarm und damit kostengünstig implementiert werden kann. Konkret sind keinerlei zusätzliche Bauteile oder Hardwaregruppen erforderlich, vielmehr kann die Erfindung basierend auf einer vorhandenen Monokamera implementiert werden. Der Nickwinkel, bzw. die Fahrzeugabsenkung (d.h. im Allgemeinen die Relativbewegung) kann vorteilhaft etwa durch Inertialsensorik und/oder Höhenstandssensoren gemessen werden, die im Fahrzeug i.d.R. ohnehin verbaut sind.

Darüberhinaus muss auch für das Triggern der Messungen keine zusätzliche Sensorik implementiert werden, vielmehr kann auch hier auf bereits vorhandener Sensorik aufgesetzt werden, die z.B. für andere Fahrerassistenz-Subsysteme verwendet wird. Die Erfindung kann hier mit einfacher Sensorik umgesetzt werden. Soll die Abstandsbestimmung z.B. nur aufgrund eines einzigen Ereignisses getriggert werden, genügt es beispielsweise, auf das Öffnen der Fahrertür abzustellen. Bereits hierdurch würde eine Kamera zur Aufnahme einer kontinuierlichen Bildsequenz aktiviert. Das erste Bild der Fahrzeugumgebung wäre hierbei einfach das erste Bild der aufgenommenen Sequenz, während das zur Abstandsbestimmung herangezogene zweite Bild durch nachgelagerte Verarbeitung aus der Sequenz identifiziert werden kann. In einem einfachen System könnte das zweite Bild eine fest vorgegebene Zeitspanne nach dem ersten Bild aufgenommen werden, bspw. eine, drei, fünf oder zehn Sekunden nach dem ersten Bild.

### Kurze Beschreibung der Zeichnungen

Weitere Aspekte und Vorteile der Erfindung werden nunmehr anhand der beigefügten Figuren eingehender beschrieben. Hierbei zeigt:
- Fig. 1: ein mit einem erfindungsgemäßen Parkassistenzsystem ausgerüstetes Fahrzeug in einer beispielhaften Parksituation;
- Fig. 2: eine schematische Darstellung funktionaler Komponenten des Parkassistenzsystems aus Fig. 1;
- Fig. 3: in Form eines Flussdiagramms eine Arbeitsweise des Parkassistenzsystems aus Fig. 2; und
- Fig. 4: eine drehbare Kamera gemäß einem Ausführungsbeispiel der Erfindung.

### Ausführungsformen der Erfindung

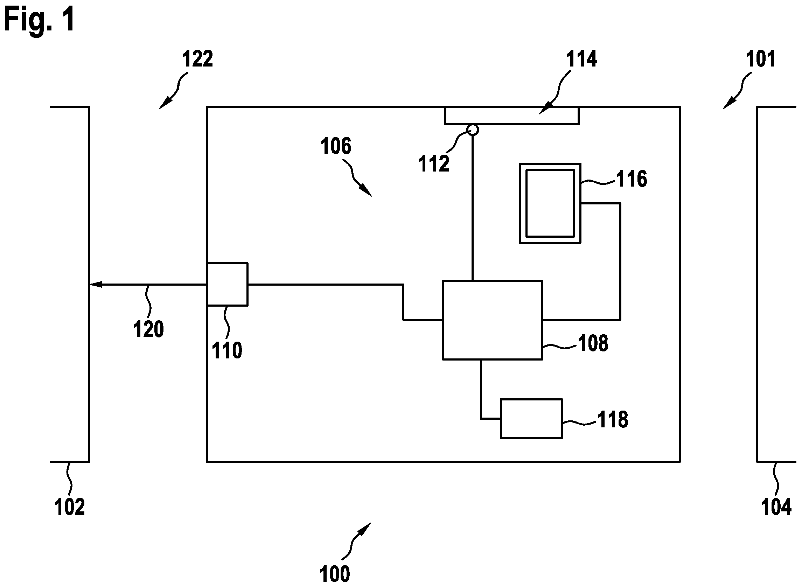

In Fig. 1 ist in schematischer Form ein Fahrzeug 100 in einer Längsparklücke 101 zwischen zwei parklückenbegrenzenden Objekten 102 und 104 skizziert, bei denen es sich bspw. um weitere Fahrzeuge handeln kann. Das Fahrzeug 100 ist mit einem Fahrerassistenzsystem (FAS) 106 ausgerüstet. Einige Komponenten des FAS 106 sind angedeutet und umfassen insbesondere eine zentrale Verarbeitungseinheit ECU 108, die unter anderem Daten einer als Monokamera ausgeführten Rückfahrkamera 110 empfängt, Daten von einem Türsensor 112 betreffend den Zustand einer Fahrertür 114 entgegennimmt, sowie seinerseits Daten auf einer Anzeigeeinheit 116 zur Anzeige für den Fahrer ausgibt. Weiterhin umfasst das FAS 106 eine schematisch als einzelner Funktionsblock 118 angedeutete Motor- bzw. Bremssystemansteuerung für eine aktive Führung bei einem Ausparken aus der Parklücke 101 erforderlich ist. Anhand der in Fig. 1 skizzierten Situation wird nachfolgend die Erfindung beispielhaft genauer beschrieben.

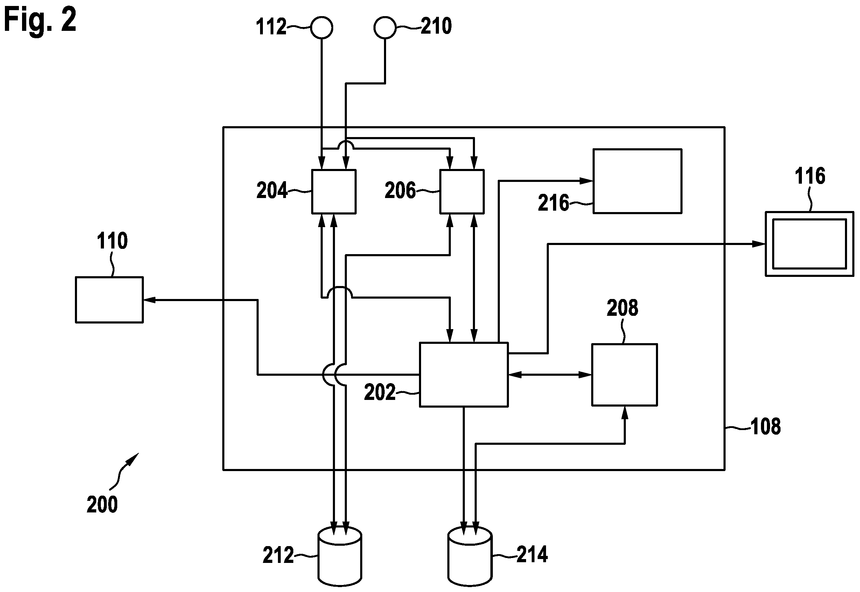

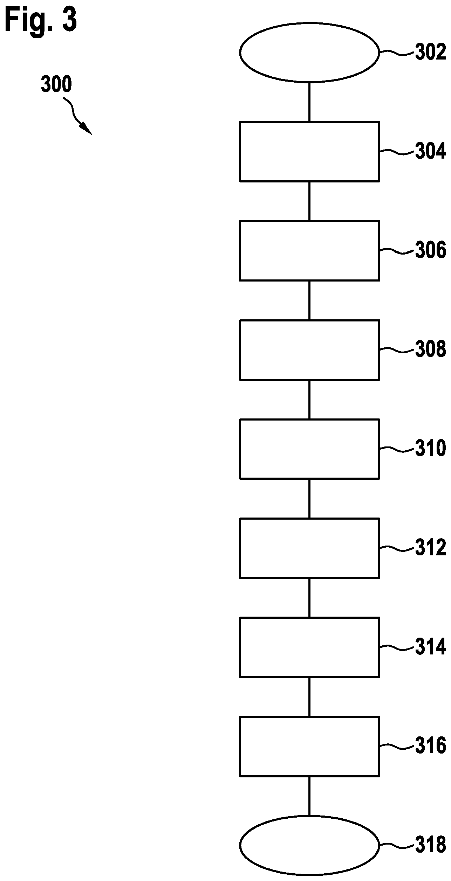

Fig. 2 zeigt in Form eines funktionalen Blockschaltbildes weitere Details des Fahrerassistenzsystems 106 aus Fig. 1, insbesondere solche Komponenten, die zusammenwirken, um einen Parkassistenten 200 zu verwirklichen. Die ECU 108 weist dazu die folgenden Komponenten auf: eine Steuerkomponente 202, einen ersten Monitor 204, einen zweiten Monitor 206 sowie eine Verarbeitungseinheit 208. Eine Zusammenwirken der in Fig. 2 dargestellten Komponenten des Parkassistenzsystems 200 wird anhand des Flussdiagramms der Fig. 3 beschrieben. Das Verfahren dient der Bestimmung des Abstandes 120 (vgl. Fig. 1) zu einem Objekt wie dem parkraumbegrenzenden Objekt 102 im rückwärtigen Umgebungsbereich des Fahrzeugs 100, während das Fahrzeug 100 noch steht (302).

In Schritt 304 wird der Monitor 204 des Parkassistenten 200 aktiviert. Die Aktivierung kann dadurch getriggert werden, dass der Motor des Fahrzeugs 100 ausgeschaltet wird, andere Komponenten des Parkassistenzsystems 200 einen Einparkvorgang in die Parklücke 101 abgeschlossen haben, die Vorderräder des Fahrzeugs 100 in eine Parkposition gebracht wurden, etc. Im Überwachungsmodus des Parkassistenten 200 ist nur der Monitor 204 weiter aktiv, der Daten der Sensoren 112, 210 entgegennimmt, wie nachfolgend beschrieben.

In Schritt 306 detektiert der Monitor 204 das Vorliegen eines ersten vordefinierten Ereignisses. Damit das Vorliegen des Ereignisses festgestellt wird, müssen vordefinierte Bedingungen erfüllt sein. Diese wurden bei der Aktivierung des Monitors 204 in Schritt 304 aus einem der ECU 108 zugeordneten Speicherbereich 212 geladen. Die Bedingungen betreffen von den Sensoren 112, 210 bereitgestellte Daten. Entsprechen die von den Sensoren 112, 210 gelieferten Daten den Vorgaben, wird das Vorliegen des vordefinierten Ereignis detektiert und der Monitor 204 liefert ein entsprechendes Detektionssignal an die Steuerkomponente 202.

Bei dem hier beschriebenen Beispiel erfasst der Sensor 112 einen Zustand der Fahrertür 114 (vgl. Fig. 1), d.h. der Sensor 112 liefert Daten, die anzeigen ob die Fahrertür 114 offen oder geschlossen ist. Die durch den Monitor 204 überwachte Bedingung kann beinhalten, dass die Fahrertür 114 geöffnet wird. Meldet der Sensor 112 entsprechende Daten, stellt der Monitor das Vorliegen des vordefinierten Ereignisses fest. Es wird davon ausgegangen, dass kurz nach dem Öffnen der Fahrertür ein Fahrer in das Fahrzeug 100 einsteigt, was zu einer Nickbewegung des Fahrzeugs 100 führt. Diese Nickbewegung wird durch den Parkassistenten 100 ausgenutzt, um den Abstand 120 zum dahinter parkenden Fahrzeug 102 zu vermessen.

Zusätzlich oder alternativ kann der Monitor auch Daten eines Sensors (nicht gezeigt) entgegennehmen, der einen Verriegelungszustand der Tür 114 überwacht. Meldet dieser Sensor bspw. eine Entriegelung der Tür an den Monitor 204, und ist durch dieses Datum eine vordefinierte Bedingung erfüllt, kann auch diese dazu beitragen, dass das Vorliegen eines Ereignisses festgestellt wird, welches mit einer (nachfolgenden) Nickbewegung im Zusammenhang steht (d.h. bei Vorliegen des Ereignisses ist eine nachfolgende Nickbewegung des Fahrzeugs 100 wahrscheinlich, so dass es sinnvoll ist, den Parkassistenten 200 zur Durchführung der Abstandsmessung zu aktivieren).

In dem hier diskutierten Ausführungsbeispiel nimmt der Monitor Daten der weiteren Sensorik 210 entgegen, die sich an mindestens einer Radaufhängung des Fahrzeugs befindet. Besteigt eine Person das Fahrzeug 100, senkt sich das Fahrzeug entsprechend ab, was anhand der Änderung des Zustandes einer Federung an einer Radaufhängung gemessen werden kann. Liefert die Sensorik 210 (die auch mehrere Sensoren an mehreren Radaufhängungen umfassen kann) eine entsprechende Information an den Monitor 204, kann dieser eine entsprechende Bedingung als erfüllt bewerten, gemäß der sich das Fahrzeug abzusenken beginnt.

Die Bedingungen, anhand derer das Vorliegen eines ersten Ereignisses festgestellt wird, umfassen bei diesem Beispiel die Öffnung der Fahrertür (Sensor 112) sowie die beginnende Absenkung des Fahrzeugs (Sensor 210). Hieraus wird geschlossen, dass das Fahrzeug nunmehr aufgrund des Zustiegs des Fahrers eine Nickbewegung durchführt, und dass der Parkassistent diese Nickbewegung ausnutzen sollte, um eine Abstandsmessung vorzunehmen. Bei diesem Beispiel ist die alleinige Öffnung der Fahrertür nicht hinreichend um die Abstandsmessung durchzuführen. So könnte bspw. die Fahrertür geöffnet werden, ohne das die Absicht besteht, die Parkposition 101 zu verlassen, so dass eine Abstandsmessung nicht erforderlich ist. Ebenso bedeutet auch eine isolierte Absenkung des Fahrzeugs nicht, dass die Parkposition verlassen werden soll, es könnte bspw. lediglich eine Person auf der Beifahrerseite einsteigen.

Öffnet allerdings jemand die Fahrertür 114 und nimmt auf dem Fahrersitz Platz, so dass sich das Fahrzeug 100 abzusenken beginnt, stimmen die von den Sensoren 112, 210 gelieferten Daten mit den entsprechenden Bedingungen überein, und der Monitor 204 liefert das entsprechende Steuersignal an die Steuereinheit 202.

In Schritt 308 aktiviert die Steuereinheit 202 - durch das vom Monitor 204 erhaltene Steuersignal getriggert - die Rückfahrkamera 110. Die Kamera 110 erzeugt aufgrund der Aktivierung ein erstes Bild der rückwärtigen Fahrzeugumgebung 122 (Fig. 1) des Fahrzeugs 100, wobei insbesondere das Objekt 102 im Bildfeld in einer ersten Position (insb. scheinbare Höhe) erscheint. Aufgrund der oben beschriebenen Implementierung erfolgt die Aufnahme des ersten Bildes erfolgt unmittelbar nach Beginn der Nickbewegung des Fahrzeugs 100, wie sie durch das Einsteigen einer Person in das Fahrzeug 100 hervorgerufen wird. Die Kamera 110 übermittelt das aufgenommene Bild an die Steuereinheit 202, welche das erste Bild in einem Speicherbereich 214 zwischenspeichert. Alternativ kann die Kamera 110 das Bild unmittelbar im Speicherbereich 214 zwischenspeichern.

Die Kamera 110 wird in Schritt 308 lediglich kurzzeitig zur Aufnahme des ersten Bildes aktiviert und sodann wieder deaktiviert. Gleichzeitig aktiviert die Steuereinheit 202 im Schritt 308 den Monitor 206. Dieser empfängt ebenfalls Daten von den Sensoren 112 und 210, gleicht diese aber mit einem anderen Satz Bedingungen ab, die der Monitor 206 aus dem Ereignisspeicher 212 bezieht. Die Bedingungen umfassen dass 1) die Fahrertür 114 geschlossen wird, und 2) eine Absenkung des Fahrzeugs zum Stillstand kommt (weil die

Person vollständig eingestiegen ist). Dass die erste Bedingung erfüllt ist, kann durch eine entsprechende Änderung in den vom Sensor 112 gelieferten Daten bestimmt werden. Dass die zweite Bedingung erfüllt ist, kann bspw. dadurch festgestellt werden, dass gemäß der von der Radaufhängesensorik 210 gelieferten Daten eine Abwärtsbewegung des Fahrzeugs 100 zum Stillstand gekommen ist (oder dabei ist, sich in eine Aufwärtsbewegung zu verkehren). Sind beide vorstehend genannten Bedingungen erfüllt, so detektiert der Monitor 206 in Schritt 310 das Vorliegen des zweiten Ereignisses und retourniert ein entsprechendes Steuersignal an die Steuereinheit 202.

In Schritt 312 aktiviert die Steuereinheit 202 - durch das vom Monitor 206 erhaltene Steuersignal getriggert - erneut die Rückfahrkamera 110, die ein zweites Bild der rückwärtigen Fahrzeugumgebung 122 aufnimmt. Hierbei wird erneut das Objekt 102 abgebildet. Aufgrund der zwischen dem ersten und dem zweiten Bild erfolgten Nickbewegung des Fahrzeugs 100 ist jedoch die (insb. vertikale) Position des Fahrzeugs 102 beim zweiten Bild gegenüber dem ersten Bild verschoben. Die Kamera 110 liefert über die Steuereinheit 202 oder direkt das zweite Bild an den Zwischenspeicher 214.

In Schritt 314 erhält die Verarbeitungseinheit 208 von der Steuereinheit 202 ein Steuersignal und entnimmt daraufhin das erste und das zweite Bild aus dem Speicher 214. Die Verarbeitungseinheit 208 bestimmt einen Abstand zum Objekt 102 basierend auf der scheinbaren Vertikal- und/oder Winkelverschiebung dieses Objektes zwischen dem ersten und dem zweiten Bild. Hierzu wird zusätzlich eine Absolutbewegung der Kamera 110 in vertikaler Richtung aufgrund der Nickbewegung des Fahrzeugs 100 bestimmt. Dafür nimmt die Steuereinheit 208 Daten der Radaufhängesensorik 210 entgegen (alternativ könnte die Verarbeitungseinheit 208 auch von den Monitoren 204 und 206 diejenigen Daten des Sensors 210 erhalten, die dort jeweils zur Detektion des ersten bzw. zweiten Ereignisses geführt haben). Durch diese Daten, welche die Absenkung des Fahrzeugs 100 betreffen, kann über den bekannten Einbauort der Kamera 110 im Fahrzeug 100 auf die tatsächliche Vertikal- und/oder Winkelbewegung der Kamera 110 geschlossen werden. Daraus sowie aus der Verschiebung des Fahrzeugs 102 im Blickfeld der Kamera 110 lässt sich ein Schätzwert für den Abstand zum Fahrzeug 102 ermitteln.

In Schritt 316 gibt die Steuereinheit 202 den von der Verarbeitungseinheit 208 zugelieferten Abstandswert aus. Die Ausgabe kann bspw. an ein HMI des Fahrerassistenzsystems 106 erfolgen, das die Anzeigeeinheit 116 und ggf. weitere Ausgabeeinheiten umfasst, wie etwa einen Lautsprecher. Desweiteren kann die Steuereinheit 202 den ermittelten Abstandswert auch an eine weitere Berechnungskomponente 216 des Parkassistenten 200 weitergeben, die basierend u.a. auf dem ermittelten Abstandswert für das Fahrzeug 100 eine Trajektorie aus der Parklücke 101 heraus berechnet. - In Schritt 318 beendet die Steuereinheit 202 den Ablauf. Das System kann mit dem Schritt 304 erneut aktiviert werden, bspw. bei einem nachfolgenden Einparken.

Während in dem oben anhand der Fig. 2 diskutierten Ausführungsbeispiel zwei Sensoriken 112, 210 für die Monitoren 204, 206 sowie die Abstandsberechnung in der Komponente 208 verwendet wurden, können in anderen Ausführungsbeispielen weniger Sensoren herangezogen werden. Bspw. kann lediglich ein einzelner Sensor wie der Türöffnungssensor 112 verwendet werden. Bei nochmals anderen Ausführungsbeispielen kann auch andere als die oben beschriebenen und/oder mehr als zwei Sensoren verwendet werden.

Bei dem anhand Fig. 2 diskutierten Ausführungsbeispiel wird die Kamera nicht kontinuierlich aktiviert, sondern wird jeweils separat und kurzzeitig nur zur Aufnahme des ersten bzw. zweiten Bildes aktiviert. Alternativ könnte die Steuereinheit 202 die Rückfahrkamera 210 auch zu einer festgelegten Zeit nach der Detektierung des ersten Ereignisses durch den Monitor 204 aktivieren; hierbei könnte der zweite Monitor 206 entfallen. Bei diesem Verfahren sollte die Zeitspanne lang genug bemessen sein, damit die Nickbewegung vollständig beendet ist, sollte also bspw. etwa 5 Sekunden nach dem Öffnen der Fahrertür oder dem Einsteigen des Fahrers erfolgen.

Auch bei einer kontinuierlichen Aktivierung der Rückfahrkamera 110 basierend auf der Detektion des ersten Ereignisses könnte der zweite Monitor 206 entfallen. Allerdings müsste hierbei die Verarbeitungskomponente 208 aus der kontinuierlichen, von der Kamera 110 aufgenommenen Bildsequenz ein zweites Bild ermitteln, bei dem etwa die durch die Nickbewegung des Fahrzeugs ausgelöste Verschiebung und/oder Verschwenkung der Kamera 110 maximal wird, um einen maximalen Optical Flow und damit eine möglichst hohe Genauigkeit der Abstandsbestimmung zu erreichen.

Die vorstehende Diskussion bezog sich auf die Verwendung der Rückfahrkamera 110 zur Abstandsbestimmung zwischen dem Fahrzeug 100 und einem Objekt 102 hinter dem Heck des Fahrzeugs 100. In gleicher Weise könnte auch eine nach vorne gerichtete Kamera (in Fig. 1 nicht gezeigt) einen Abstand zwischen dem Fahrzeug 100 und dem parklückenbegrenzenden Objekt 104 bestimmen.

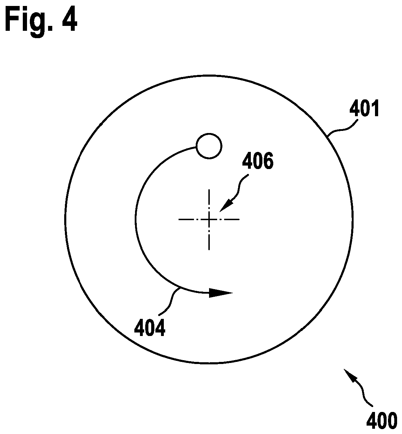

Fig. 4 zeigt in schematischer Form eine Vorderansicht einer Kamera 400, die bspw. eine Implementierung der Rückfahrkamera 112 aus Fig. 1 sein könnte. Die Kamera 400 umfasst ein zylinderartiges Gehäuse 401, von dem Fig. 4 eine Vorderansicht zeigt. An der Stirnseite des Gehäuses 401 befindet sich ein Lichteintritt 402, bspw. eine Linse oder ein Objektiv. Der Lichteintritt 402 ist - wie durch den Pfeil 404 angedeutet - um eine Drehachse 406 drehbar. Bspw. könnte das Gehäuse 401 drehbar gelagert sein. Die Drehachse 406 kann sich bspw. parallel zum Boden und parallel zu einer Richtung erstrecken, wie sie durch den Abstandspfeil 120 in Fig. 1 angedeutet ist.

Zur Abstandsbestimmung würde die Kamera 402 in der in Fig. 4 gezeigten Position ein erstes Bild aufnehmen und nach einer Rotation um 180° - wie durch den Pfeil 404 angedeutet - ein zweites Bild aufnehmen. Die Rotation könnte unmittelbar nach der Aufnahme des ersten Bildes veranlasst werden. Die Aufnahme des zweiten Bildes würde nach einer Nickbewegung mittels eines Verfahrens wie oben beschrieben getriggert und würde in der rotierten Position erfolgen. Hierdurch würde ein durch die Nickbewegung erzeugter optischer Fluss zwischen dem ersten und dem zweiten Bild verstärkt.

Alternativ ist es nach einem nicht beanspruchten Beispiel auch möglich, eine Kamera mit einem drehbaren bzw. schwenkbaren Lichteintritt wie in Fig. 4 gezeigt als einziges Element zu nutzen (d.h. ohne Nickbewegung), um einen optischen Fluss zu erzeugen und hierdurch bei stehendem Fahrzeug mit einer Monokamera eine Abstandsbestimmung zu ermöglichen. Gegenüber dem einleitend diskutierten Stand der Technik ist diese Lösung vorteilhaft, da ein komplexes und fehleranfälliges Schienensystem entfallen kann; es wird lediglich eine rotierbare (drehbare bzw. schwenkbare) Kamera benötigt.

Die Erfindung ist nicht auf die hier beschriebenen Ausführungsbeispiele und die darin hervorgehobenen Aspekte beschränkt; vielmehr sind innerhalb des durch die anhängenden Ansprüche angegebenen Bereichs eine Vielzahl von Abwandlungen möglich, die im Rahmen fachmännischen Handelns liegen.

## Patentansprüche

1. Kamerabasiertes Verfahren zur Abstandsbestimmung zu einem Objekt (102) in einer Fahrzeugumgebung (122) bei einem stehenden Fahrzeug (100), wobei eine Kamera (110) fest an dem Fahrzeug (100) angebracht ist, mit den folgenden Schritten:
- Detektieren (306) eines ersten vordefinierten Ereignisses, welches in Zusammenhang mit einer Nickbewegung des Fahrzeugs (100) steht;
- Basierend auf der Detektion des ersten Ereignisses, Aktivieren (308) der Kamera (110), um mit zeitlichem Bezug zur Nickbewegung ein erstes und ein zweites Bild der vorderen oder rückwärtigen Fahrzeugumgebung (122) aufzunehmen;
- Bestimmung einer absoluten Verlagerung der Kamera (110) in vertikaler Richtung und/oder durch Verschwenken einer Bildachse der Kamera (110) durch die Nickbewegung, und
- Verarbeiten (314) des ersten und des zweiten Bildes, um aus einer zwischen den Aufnahmezeitpunkten des ersten und des zweiten Bildes aufgrund der Nickbewegung erfolgten Verschiebung des Objekts (102) im Blickfeld der Kamera (110) einen Abstand (120) zum Objekt (102) zu bestimmen, wobei die bestimmte absolute Verlagerung in die Bestimmung des Abstandes zum Objekt (102) eingeht.

2. Verfahren nach Anspruch 1,
wobei das erste Bild vor oder während der Nickbewegung und das zweite Bild zeitlich darauffolgend während oder nach der Nickbewegung aufgenommen wird.

3. Verfahren nach Anspruch 1 oder 2,
wobei das erste Ereignis mindestens eines der folgenden Ereignisse umfasst: Entriegelung einer Fahrzeugtür, Öffnung einer Fahrzeugtür, Veränderung einer Gewichtsbelastung eines Fahrzeugsitzes, Absenkung des Fahrzeugs.

4. Verfahren nach einem der vorhergehenden Ansprüche,
wobei das zweite Bild basierend auf einer Detektion (310) eines zweiten Ereignisses aufgenommen wird, welches mit der Nickbewegung in Zusammenhang steht.

5. Verfahren nach Anspruch 4,
wobei das zweite Ereignis mindestens eines der folgenden Ereignisse umfasst: Schließung einer Fahrzeugtür, konstante Gewichtsbelastung eines Fahrzeugsitzes, Ruhe oder Aufwärtsbewegung des Fahrzeugs, Anlassen des Motors, Einlegen eines Ganges.

6. Verfahren nach einem der vorhergehenden Ansprüche, wobei die Kamera eine Rückfahrkamera (110) eines Parkassistenzsystems (106) des Fahrzeugs (100) ist.

7. Computerprogramm zur Durchführung des Verfahrens nach einem der vorhergehenden Ansprüche, wenn das Computerprogramm auf einer programmierbaren Computereinrichtung eines Parkassistenzsystems nach Anspruch 8 ausgeführt wird.

8. Parkassistenzsystem (106) mit einer Kamera (110) ausgebildet zur Abstandsbestimmung zu einem Objekt (102) in einer Fahrzeugumgebung (122) bei einem stehenden Fahrzeug (100), wobei die Kamera (110) dazu eingerichtet ist, fest an dem Fahrzeug (100) angebracht zu sein, mit den folgenden Komponenten:
- einer Komponente (204) zum Detektieren eines ersten vordefinierten Ereignisses, welches in Zusammenhang mit einer Nickbewegung des Fahrzeugs (100) erfolgt;
- einer Komponente (202) zum Aktivieren, basierend auf der Detektion des ersten Ereignisses, der Kamera (110) um mit zeitlichem Bezug zur Nickbewegung ein erstes und ein zweites Bild der vorderen oder rückwärtigen Fahrzeugumgebung (122) aufzunehmen; und
- einer Steuereinheit (208) zur Bestimmung einer absoluten Verlagerung der Kamera (110) in vertikaler Richtung und/oder durch Verschwenken einer Bildachse der Kamera (110) durch die Nickbewegung, wobei die Steuereinheit (208) das erste und das zweite Bild verarbeitet, um aus einer zwischen den Aufnahmezeitpunkten des ersten und des zweiten Bildes aufgrund der Nickbewegung erfolgten Verschiebung des Objekts (102) im Blickfeld der Kamera (110) einen Abstand (120) zum Objekt (102) zu bestimmen, wobei die bestimmte absolute Verlagerung in die Bestimmung des Abstandes zum Objekt (102) eingeht.

## Claims

1. Camera-based method for determining the distance from an object (102) in the surroundings (122) of a vehicle, in the case of a stationary vehicle (100), wherein a camera (110) is permanently attached to the vehicle (100), having the following steps:
- detecting (306) a first predefined event which relates to a pitching movement of the vehicle (100);
- activating (308) the camera (110) on the basis of the detection of the first event, in order to capture a first and a second image of the surroundings (122) to the front or rear of the vehicle with a chronological relationship to the pitching movement;
- determining an absolute displacement of the camera (110) in the vertical direction and/or by pivoting an image axis of the camera (110) by means of the pitching movement, and
- processing (314) the first and second images in order to determine a distance (120) from the object (102) from shifting of the object (102), which has occurred between the recording times of the first and second images owing to the pitching movement, in the field of vision of the camera (110), wherein the determined absolute displacement is included in the determination of the distance from the object (102).

2. Method according to Claim 1,
wherein the first image is recorded before or during the pitching movement, and the second image is recorded chronologically following it during or after the pitching movement.

3. Method according to Claim 1 or 2,
wherein the first event comprises at least one of the following events: unlocking of a vehicle door, opening of a vehicle door, changing of a weight load on a vehicle seat, lowering of the vehicle.

4. Method according to one of the preceding claims, wherein the second image is recorded on the basis of detection (310) of a second event which is related to the pitching movement.

5. Method according to Claim 4,
wherein the second event comprises at least one of the following events: closing of a vehicle door, constant weight loading of a vehicle seat, the vehicle is at rest or moving upwards, starting of the engine and engagement of a gear.

6. Method according to one of the preceding claims, wherein the camera is a reversing camera (110) of a parking assistance system (106) of the vehicle (100).

7. Computer program for carrying out the method according to one of the preceding claims, when the computer program is run on a programmable computer device of a parking assistance system according to Claim 8.

8. Parking assistance system (106) with a camera (110) designed to determine a distance from an object (102) in the surroundings (122) of a vehicle in the case of a stationary vehicle (100), wherein the camera (110) is configured to be permanently mounted on the vehicle (100), having the following components:
- a component (204) for detecting a first predefined event which occurs in relation to a pitching movement of the vehicle (100);
- a component (202) for activating, on the basis of the detection of the first event, the camera (110) with a chronological relationship with the pitching movement, in order to capture a first and a second image of the surroundings (122) to the front or to the rear of the vehicle; and
- a control unit (208) for determining absolute displacement of the camera (110) in the vertical direction and/or as a result of pivoting of an image axis of the camera (110) by the pitching movement, wherein the control unit (208) processes the first and second images in order to determine a distance (120) from the object (102) from shifting of the object (102), which has occurred between the recording times of the first and second images owing to the pitching movement, in the field of vision of the camera (110), wherein the determined absolute displacement is included in the determination of the distance from the object (102).

## Revendications

1. Procédé basé sur caméra pour déterminer la distance par rapport à un objet (102) dans un environnement de véhicule (122) avec un véhicule (100) à l'arrêt, une caméra (110) étant montée à demeure sur le véhicule (100), comprenant les étapes suivantes :
- détection (306) d'un premier événement prédéfini, qui se produit en association avec un mouvement de tangage du véhicule (100) ;
- en se basant sur la détection du premier événement, activation (308) de la caméra (110) en vue d'enregistrer une première et une deuxième image de l'environnement de véhicule (122) avant et arrière avec référence temporelle au mouvement de tangage ;
- détermination d'un déplacement absolu de la caméra (110) dans la direction verticale et/ou par pivotement d'un axe d'image de la caméra (110) en raison du mouvement de tangage, et
- traitement (314) de la première et de la deuxième image en vue de déterminer une distance (120) par rapport à l'objet (102) à partir d'un décalage de l'objet (102) dans le champ de vision de la caméra (110), qui s'est produit entre les instants d'enregistrement de la première et de la deuxième image en raison du mouvement de tangage, le déplacement absolu déterminé intervenant dans la détermination de la distance par rapport à l'objet (102).

2. Procédé selon la revendication 1, la première image étant enregistrée avant ou pendant le mouvement de tangage et la deuxième image étant enregistrée temporellement à la suite pendant ou après le mouvement de tangage.

3. Procédé selon la revendication 1 ou 2, le premier événement comprenant au moins l'un des événements suivants : déverrouillage d'une portière de véhicule, ouverture d'une portière de véhicule, modification d'un poids appliqué à un siège de véhicule, abaissement du véhicule.

4. Procédé selon l'une des revendications précédentes, la deuxième image étant enregistrée en se basant sur une détection (310) d'un deuxième événement, lequel est en relation avec le mouvement de tangage.

5. Procédé selon la revendication 4, le deuxième événement comprenant l'un des événements suivants : fermeture d'une portière de véhicule, poids constant appliqué à un siège de véhicule, repos ou mouvement ascendant du véhicule, démarrage du moteur, engagement d'un rapport.

6. Procédé selon l'une des revendications précédentes, la caméra étant une caméra de marche arrière (110) d'un système d'assistance au stationnement (106) du véhicule (100).

7. Programme informatique destiné à mettre en œuvre le procédé selon l'une des revendications précédentes lorsque le programme informatique est exécuté sur un dispositif informatique programmable d'un système d'assistance au stationnement selon la revendication 8.

8. Système d'assistance au stationnement (106) comprenant une caméra (110) configurée pour déterminer la distance par rapport à un objet (102) dans un environnement de véhicule (122) avec un véhicule (100) à l'arrêt, la caméra (110) étant conçue pour être montée à demeure sur le véhicule (100), comprenant les composants suivants :
- un composant (204) servant à détecter un premier événement prédéfini, qui se produit en association avec un mouvement de tangage du véhicule (100) ;
- un composant (202) servant à activer, en se basant sur la détection du premier événement, la caméra (110) en vue d'enregistrer une première et une deuxième image de l'environnement de véhicule (122) avant et arrière avec référence temporelle au mouvement de tangage ; et
- une unité de commande (208) servant à déterminer un déplacement absolu de la caméra (110) dans la direction verticale et/ou par pivotement d'un axe d'image de la caméra (110) en raison du mouvement de tangage, l'unité de commande (208) traitant la première et la deuxième image en vue de déterminer une distance (120) par rapport à l'objet (102) à partir d'un décalage de l'objet (102) dans le champ de vision de la caméra (110), qui s'est produit entre les instants d'enregistrement de la première et de la deuxième image en raison du mouvement de tangage, le déplacement absolu déterminé intervenant dans la détermination de la distance par rapport à l'objet (102).
